# EUROPÄISCHE PATENTSCHRIFT

(11) **EP 2 089 181 B1**
(45) Veröffentlichungstag und Bekanntmachung des Hinweises auf die Patenterteilung: **07.03.2012**
(21) Anmeldenummer: 07821321.2
(22) Anmeldetag: 15.10.2007
(51) Int. Cl.: B23Q 11/00, B23Q 11/12, F16C 37/00

(54) **LÄNGENKOMPENSATIONSEINHEIT, INSBESONDERE FÜR EINE WERKZEUGMASCHINE**
LENGTH COMPENSATION UNIT, IN PARTICULAR FOR A MACHINE TOOL
UNITÉ DE COMPENSATION DE LONGUEUR, NOTAMMENT POUR UNE MACHINE-OUTIL

(30) Priorität: 21.10.2006 DE 102006049774
(43) Veröffentlichungstag der Anmeldung: 19.08.2009
(73) Patentinhaber: Schaeffler Technologies GmbH & Co. KG, 91074 Herzogenaurach (DE)
(72) Erfinder: HESTERMANN, Jörg-Oliver, 91086 Aurachtal (DE)
(86) Internationale Anmeldenummer: PCT/EP2007/060954
(87) Internationale Veröffentlichungsnummer: WO 2008/046809

(56) Entgegenhaltungen:
- DE-A1- 10 233 253
- JP-A- 2 101 944
- JP-A- 10 103 349
- JP-A- 2000 237 930
- JP-A- 2003 113 835
- JP-A- 2004 278 570
- US-A- 3 317 258

## Beschreibung

### Gebiet der Erfindung

Die Erfindung betrifft eine insbesondere für eine Werkzeugmaschine geeignete Längenkompensationseinheit, nach dem Oberbegriff des Anspruchs 1. Eine solche Längenkompensationseinheit ist beispielsweise aus der US 3,317,258 A und aus der JP 10 103349 A bekannt.

### Hintergrund der Erfindung

Aus der DE 103 43 320 A1 ist eine Werkzeugmaschine bekannt, welche eine zur Korrektur der Lage von Spindelgehäusen vorgesehene Stellvorrichtung umfasst, die mit Peltier-Elementen arbeitet. Die Peltier-Elemente werden dabei zum Kühlen oder zum Heizen von mit Spindelgehäusen verbundenen Rippen verwendet. Durch die Änderung der Temperatur der einerseits mit einer Tragstruktur der Werkzeugmaschine und andererseits mit je einem Spindelgehäuse verbundenen Rippen ändert sich deren Länge und damit die Lage der Spindelgehäuse. In entsprechender Weise sind bei der aus der DE 103 43 320 A1 bekannten Werkzeugmaschine auch zwischen zwei Spindelgehäusen Rippen angeordnet, deren Länge durch Beheizung oder Kühlung mit einem Peltier-Element veränderbar ist.

Aus der DD 284 627 A5 ist eine Einrichtung zur thermischen Stabilisierung einer Arbeitsspindellagerung bekannt, die ebenfalls mit Peltier-Effekt-Einrichtungen arbeitet. Die Peltier-Effekt-Einrichtungen sind in diesem Fall im Bereich von Spindellagern angeordnet, um Wärme abzuführen und damit eine Lageabweichung der Arbeitsspindel zu kompensieren.

Aus der JP 10 103349 A ist ein als zweireihiges Schrägkugellager ausgebildetes Spindellager bekannt, welches ein Peltier-Element umfasst, das am Außenring des Lagers angeordnet ist, um gezielt einen Temperaturunterschied zwischen dem Innenring und dem Außenring zu generieren.

Eine weitere Spindellagerung, welche den Peltier-Effekt zur Temperierung nutzt, ist aus der JP 02 101944 A bekannt. In diesem Fall ist zusätzlich eine Wasserkühlung vorgesehen.

### Aufgabe der Erfindung

Der Erfindung liegt die Aufgabe zugrunde, eine besonders wirksame, mit mindestens einem Peltier-Element arbeitende, insbesondere für eine Werkzeugmaschine mit einer fest-fest gelagerten Spindel geeignete, Längenkompensationseinheit anzugeben.

### Zusammenfassung der Erfindung

Diese Aufgabe wird erfindungsgemäß gelöst durch eine Längenkompensationseinheit mit den Merkmalen des Anspruchs 1. Diese Längenkompensationseinheit umfasst ein als Wälzlager ausgebildetes Spindellager, dessen mindestens einer Innenring unmittelbar mit einer um eine Achse rotierbaren Spindel, insbesondere einer Werkzeugmaschine, und dessen Außenring mittelbar, nämlich über eine konzentrisch zur Spindelachse angeordnete Stellvorrichtung, mit einer Anschlusskonstruktion, beispielsweise einer Tragstruktur der Werkzeugmaschine, verbindbar ist. Zur Temperierung der Stellvorrichtung ist ein vorzugsweise ebenfalls konzentrisch zum Spindellager angeordnetes Peltier-Element vorgesehen. Der Kraftfluss zwischen der Spindel und der Anschlusskonstruktion erfolgt somit von der Spindel über den mindestens einen Innenring des Spindellagers, die Wälzkörper des Spindellagers, den mindestens einen Außenring des Spindellagers und die Stellvorrichtung zur Anschlusskonstruktion. Der Außenring des Spindellagers ist nicht direkt an der Anschlusskonstruktion befestigt. Durch die konzentrische Anordnung der per Peltier-Element temperierten Stellvorrichtung und des Spindellagers ist sichergestellt, dass eine temperaturbedingte Abmessungsänderung der Stellvorrichtung ausschließlich der Längenkompensation der Spindel dient, wobei die Lage der Spindelachse unverändert bleibt. Die Leitung des gesamten Kraftflusses von der Spindel zur Anschlusskonstruktion über die Stellvorrichtung ermöglicht eine genau determinierbare Kompensation der Positionierung des Spindellagers mittels Temperierung der Stellvorrichtung.

Die Stellvorrichtung umfasst ein inneres sowie ein dieses radial umgebendes äußeres Stellteil, wobei ein den Peltier-Effekt nutzendes Temperierungselement derart zwischen den Stellteilen angeordnet ist, dass es eines der Stellteile beheizt, während es gleichzeitig das andere Stellteil abkühlt. Die mechanische Verbindung der Stellteile miteinander sowie mit dem Außenring des Spindellagers und mit der Anschlusskonstruktion ist dabei derart gestaltet, dass die Kontraktion des einen Stellteils und die Expansion des anderen Stellteils gleichsinnig in eine Verlagerung des Spindellagers in einer bestimmten axialen Richtung umgesetzt werden. Die Stellvorrichtung ist aus drei oder mehr Stellteilen zusammengesetzt, welche konzentrisch zur Spindelachse angeordnet und hülsenförmig ineinander geschachtelt sind. Hierbei wechseln sich stets ein beheiztes und ein gekühltes Stellteil ab.

Nachfolgend wird ein Ausführungsbeispiel der Erfindung anhand einer Zeichnung näher erläutert. Hierin zeigen:

### Ausführliche Beschreibung der Zeichnung

- Figur 1: in einer Schnittdarstellung eine nicht beanspruchte Längenkompensationseinheit für eine Werkzeugmaschine, und

- Figur 2 a und b: in einer Schnittdarstellung analog Figur 1 sowie in einer Draufsicht ein zweites Ausführungsbeispiel einer Längenkompensationseinheit für eine Werkzeugmaschine.

Einander entsprechende oder gleichwirkende Teile sind in allen Figuren mit den gleichen Bezugszeichen gekennzeichnet.

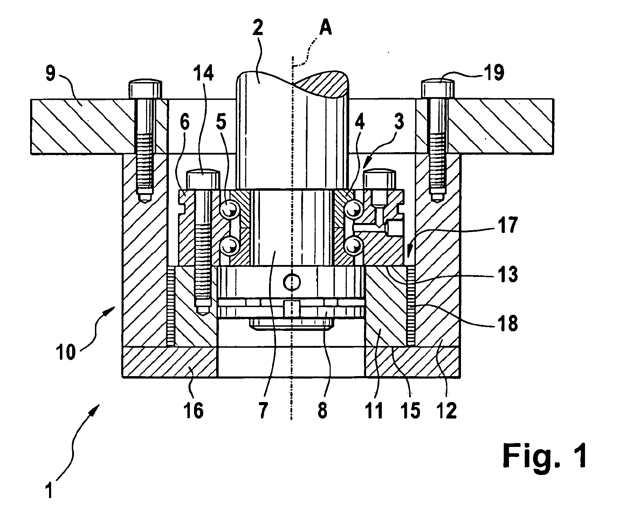

Die Figur 1 zeigt eine Längenkompensationseinheit 1, die zum gezielten Ausgleich von temperaturbedingten Längenänderungen einer nur ansatzweise dargestellten Spindel 2 eines Kugelgewindetriebs geeignet ist. Die mit der Symmetrieachse der Längenkompensationseinheit 1 übereinstimmende Rotationsachse der Spindel 2, welche als so genannte gereckte Spindel unter Zugspannung steht, ist mit A bezeichnet. Zur Lagerung der Spindel 2 ist ein Spindellager 3, nämlich ein zweireihiges Schrägkugellager, vorgesehen. Dieses Spindellager 3 weist zwei Innenringe 4, eine Anzahl von Kugeln als Wälzkörper 5, sowie einen Außenring 6 auf. Zur Sicherung der inneren Lagerringe 4 auf einem Zapfen 7 der Spindel 2 ist eine Sicherungsmutter 8 vorgesehen, deren Bauart prinzipiell aus der EP 0 609 286 B1 bekannt ist.

Zwischen dem äußeren Lagerring 6 und einer Anschlusskonstruktion 9 einer nicht weiter dargestellten Werkzeugmaschine ist eine Stellvorrichtung 10 geschaltet, welche ein inneres Stellteil 11 und ein äußeres Stellteil 12 umfasst. Beide Stellteile 11, 12 sind konzentrisch zur Achse A angeordnet und ineinander geschachtelt, wobei das innere Stellteil 11 in axialer Richtung kürzer als das äußere Stellteil 12 ist. Das rohrförmige innere Stellteil 11 grenzt an eine Stirnfläche 13 des Außenrings 6 und ist mit diesem mit Schrauben 14 verschraubt. Eine dem Außenring 6 abgewandte Stirnfläche 15 des inneren Stellteils 11 liegt an einer Verbindungsscheibe 16 an, die die mechanische Verbindung zwischen dem inneren Stellteil 11 und dem äußeren Stellteil 12 herstellt. Im Gegensatz zu den Stellteilen 11, 12 ist die Verbindungsscheibe 16 vorzugsweise aus einem Material mit geringer Wärmeleitfähigkeit gefertigt. Die Verbindungsscheibe 16 ist mit den Stellteilen 11, 12 beispielsweise mittels nicht dargestellter Verschraubungen verbunden. Zwischen dem rohrförmigen äußeren Stellteil 12 und dem koaxial zu diesem angeordneten inneren Stellteil 11 ist ein ringförmiger Spalt 17 gebildet, in welchem ein Peltier-Element als Temperierungselement 18 angeordnet ist. Das äußere Stellteil 12 ragt in axialer Richtung auf der der Verbindungsscheibe 16 abgewandten Seite über das Temperierungselement 18 hinaus und ist mit Schrauben 19 an der Anschlusskonstruktion 9 befestigt.

Das Temperierungselement 18 hat einen flächigen Aufbau mit einer ersten, kühlenden Oberfläche und einer zweiten, heizenden Oberfläche. Die kühlende Oberfläche liegt an der Außenseite des inneren Stellteils 11 an, während die heizende Oberfläche an der Innenseite des äußeren Stellteils 12 anliegt. Auf diese Weise transportiert das den Peltier-Effekt nutzende Temperierungselement 18 Wärme vom inneren Stellteil 11 zum äußeren Stellteil 12. Beide Stellteile 11, 12 sind vorzugsweise aus Metall, insbesondere aus Stahl, gefertigt. Die Abkühlung des inneren Stellteils 11 bei gleichzeitiger Erhitzung des äußeren Stellteils 12 bedeutet eine zweifache Nutzung der mit dem Temperierungselement 18 erzeugten Temperaturänderung. Eine zusätzliche Vorrichtung zum Temperaturausgleich, etwa ein Kühler, ist nicht erforderlich. Das an den Außenring 6 angeflanschte innere Stellteil 11 hat zusätzlich zur Längenkompensation den gewünschten Effekt einer Kühlung des Spindellagers 3. Durch Umkehr der Stromrichtung im Temperierungselement 18 wäre es jedoch prinzipiell auch auf einfache Weise möglich, das innere Stellteil 11 aufzuheizen und gleichzeitig das äußere Stellteil 12 abzukühlen, um die Positionierung des Spindellagers 3 in der umgekehrten axialen Richtung zu ändern. In jedem Fall sorgt die großflächige Anlage des Temperierungselements 18 an den Stellteilen 11, 12 für deren gleichmäßige, gut vorausberechenbare Aufheizung bzw. Abkühlung. Die gesamte von der Spindel 2 auf das Spindellager 3 eingeleitete axiale Kraft wird über die hintereinander geschalteten Stellteile 11, 12 zur Anschlusskonstruktion 9 geleitet. Durch axiale Verlängerung der Stellvorrichtung 10, das heißt der einzelnen Stellteile 11, 12, ist die Längenkompensationseinheit 1 bei Bedarf für beliebige temperaturbedingte Längenänderungen der Spindel 2 auslegbar.

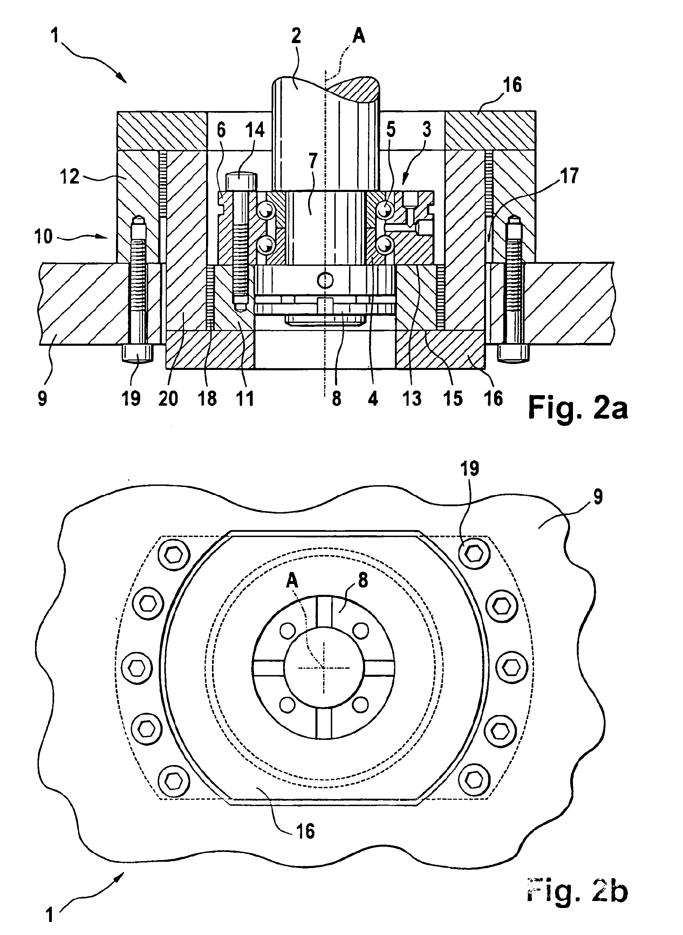

Die Figuren 2a, 2b zeigen eine Längenkompensationseinheit 1, welche im Vergleich zum Ausführungsbeispiel nach Figur 1 einen Längenausgleich in einem erweiterten Bereich ermöglicht, ohne zusätzlichen axialen Bauraum zu erfordern. Hierbei umfasst die Stellvorrichtung 10 zusätzlich zum inneren, mit dem Außenring 6 verbundenen Stellteil 11 und äußeren, mit der Anschlusskonstruktion 9 verbundenen Stellteil 12 ein weiteres, mittleres Stellteil 20. Während das letztgenannte Stellteil 20 durch zwei Temperierungselemente 18 aufgewärmt wird, werden die dem mittleren Stellteil 20 auf dessen Innen- bzw. Außenseite benachbarten Stellteile 11, 12 gleichzeitig abgekühlt. In beiden Ausführungsbeispielen ist im Vergleich zu Spindellagerungen ohne Längenkompensation sowohl die kritische Drehzahl der Spindel 2 als auch die Steifigkeit der Spindellagerung 3 deutlich erhöht, wobei zu hohe Belastungen des Spindellagers 3 vermieden werden.

### Bezugszeichenliste

- 1: Längenkompensationseinheit
- 2: Spindel
- 3: Spindellager
- 4: Innenring
- 5: Wälzkörper
- 6: Außenring
- 7: Zapfen
- 8: Sicherungsmutter
- 9: Anschlusskonstruktion
- 10: Stellvorrichtung
- 11: inneres Stellteil
- 12: äußeres Stellteil
- 13: Stirnfläche des Außenrings
- 14: Schraube
- 15: Stirnfläche des inneren Stellteils
- 16: Verbindungsscheibe
- 17: Spalt
- 18: Peltier-Element, Temperierungselement
- 19: Schraube
- 20: mittleres Stellteil

- A: Achse

## Patentansprüche

1. Längenkompensationseinheit, insbesondere für eine Werkzeugmaschine, mit
o einem symmetrisch zu einer Achse (A) ausgebildeten Spindellager (3), welches einen inneren Lagerring (4) und einen äußeren Lagerring (6) sowie zwischen den Lagerringen (4, 6) angeordnete Wälzkörper (5) aufweist, wobei der innere Lagerring (4) zur Verbindung mit einer um die Achse (A) rotierbaren Spindel (2) vorgesehen ist,
o einer mit dem äußeren Lagerring (6) verbundenen, konzentrisch zur Achse (A) angeordneten Stellvorrichtung (10), die zur Verbindung mit einer Anschlusskonstruktion (9) vorgesehen ist,
o mindestens einem die Stellvorrichtung (10) kontaktierenden, den Peltier-Effekt nutzenden Temperierungselement (18),
wobei die Stellvorrichtung (10) ein inneres Stellteil (11) sowie ein dieses radial umgebendes äußeres Stellteil (12) umfasst, wobei das Temperierungselement (18) zwischen den Stellteilen angeordnet ist, **dadurch gekennzeichnet, dass** im Kraftfluss zwischen dem Außenring (6) des Spindellagers (3) und der Anschlusskonstruktion (9) zusätzlich zu einem mit dem Außenring (6) verbundenen, inneren Stellteil (11) und einem zur Verbindung mit der Anschlusskonstruktion (9) vorgesehenen, äußeren Stellteil (12) mindestens ein weiteres, mittleres Stellteil (20) angeordnet ist, wobei die einzelnen Stellteile (11, 12, 20) konzentrisch zur Achse (A) hülsenförmig ineinander geschachtelt sind und zwei Temperierungselemente (18) vorgesehen sind, welche dazu ausgebildet sind, das mittlere Stellteil (20) aufzuwärmen und gleichzeitig das innere Stellteil (11) sowie das äußere Stellteil (12) abzukühlen.

2. Längenkompensationseinheit nach Anspruch 1, **dadurch gekennzeichnet, dass** das Spindellager (3) als zweireihiges Schrägkugellager ausgebildet ist.

## Claims

1. Length compensation unit, in particular for a machine tool, comprising:
• a spindle bearing (3) which is formed symmetrically to an axis (A) and which has an inner bearing ring (4) and an outer bearing ring (6) and rolling elements (5) arranged between the bearing rings (4, 6), the inner bearing ring (4) being provided for connecting to a spindle (2) which is rotatable about the axis (A),
• an adjusting device (10) which is connected to the outer bearing ring (6), is arranged concentrically to the axis (A) and is provided for connecting to a connecting structure (9),
• at least one temperature-regulating element (18) which is in contact with the adjusting device (10) and utilizes the Peltier effect,
wherein the adjusting device (10) comprises an inner adjusting part (11) and an outer adjusting part (12) which radially surrounds said inner adjusting part (11), wherein the temperature-regulating element (18) is arranged between the adjusting parts, **characterized in that** at least one further, central adjusting part (20) is arranged in the force flow between the outer ring (6) of the spindle bearing (3) and the connecting structure (9) in addition to an inner adjusting part (11) connected to the outer ring (6) and an outer adjusting part (12) provided for connecting to the connecting structure (9), wherein the individual adjusting parts (11, 12, 20) are nested one inside the other in a sleeve shape concentrically to the axis (A), and two temperature-regulating elements (18) are provided which are designed for heating the central adjusting part (20) and simultaneously cooling the inner adjusting part (11) and the outer adjusting part (12).

2. Length compensation unit according to Claim 1, **characterized in that** the spindle bearing (3) is designed as a double-row angular contact ball bearing.

## Revendications

1. Unité de compensation de longueur, en particulier pour une machine-outil, comprenant
- un roulement de broche (3) qui est réalisé de manière symétrique par rapport à un axe (A) et qui comprend une bague de roulement intérieure (4) et une bague de roulement extérieure (6) ainsi que des corps de roulement disposés entre les bagues de roulement (4, 6), la bague de roulement intérieure (4) étant prévue pour la liaison à une broche (2) qui peut tourner autour de l'axe (A),
- un dispositif de réglage (10) qui est disposé de manière concentrique à l'axe (A), qui est relié à la bague de roulement extérieure (6) et qui est prévu pour la liaison à une construction de raccordement (9),
- au moins un élément de régulation de la température (18) utilisant l'effet Peltier et en contact avec le dispositif de réglage (10),
le dispositif de réglage (10) comportant une pièce de réglage intérieure (11) ainsi qu'une pièce de réglage extérieure (12) entourant radialement cette dernière, l'élément de régulation de la température (18) étant disposé entre les pièces de réglage, **caractérisée en ce qu'**au moins une pièce de réglage médiane (20) supplémentaire est disposée dans le flux de force entre la bague extérieure (6) du roulement de broche (3) et la construction de raccordement (9), en plus d'une pièce de réglage intérieure (11) reliée à la bague extérieure (6) et d'une pièce de réglage extérieure (12) prévue pour la liaison à la construction de raccordement (9), les pièces de réglage individuelles (11, 12, 20) étant emboîtées les unes dans les autres en forme de douilles de manière concentrique à l'axe (A) et deux éléments de régulation de la température (18) étant prévus, lesquels sont conçus pour réchauffer la pièce de réglage médiane (20) et simultanément refroidir à la fois la pièce de réglage intérieure (11) et la pièce de réglage extérieure (12).

2. Unité de compensation de longueur selon la revendication 1, **caractérisée en ce que** le roulement de broche (3) est réalisé sous forme de roulement à billes à contact oblique à deux rangées.
